# EUROPEAN PATENT APPLICATION

(11) **EP 3 450 149 A1**
(43) Date of publication of application: **06.03.2019**
(21) Application number: 17843253.0
(22) Date of filing: 14.07.2017
(51) Int. Cl.: B29C 70/52, B32B 5/28, C08J 5/04

(54) **COMPOSITE MATERIAL MEMBER, REINFORCED MOLDED BODY, PULTRUSION DEVICE, AND PULTRUSION METHOD**

(30) Priority: 22.08.2016 JP 2016161863
(71) Applicant: Mitsubishi Heavy Industries, Ltd., Tokyo 108-8215 (JP)
(72) Inventor: MORISHIMA, Shunichi, Tokyo 108-8215 (JP); KOZASA, Toshio, Tokyo 108-8215 (JP); HATANO, Masatake, Tokyo 108-8215 (JP); KISHIMOTO, Kazuaki, Tokyo 108-8215 (JP); TAKEUCHI, Yukio, Tokyo 108-8215 (JP); YAMASHITA, Masayuki, Tokyo 108-8215 (JP); OJIKA, Hitoshi, Nagoya-shi Aichi 455-0024 (JP)
(74) Representative: Henkel, Breuer & Partner
(86) International application number: PCT/JP2017/025823
(87) International publication number: WO 2018/037766

(57) **Abstract**

A pultrusion material 10 that is a composite material member comprises: a plurality of fiber sheets 20 that extend along a lengthwise direction; and a reinforcement material 24 that is provided to an interior of a corner section formed by the plurality of fiber sheets 20, wherein the thickness of the corner section 12 where the reinforcement material 24 is provided is comparatively thicker than the thickness of flat sections 13 that are continuous with the corner section 12. A fiber sheet 20 that is provided to an inner surface of the corner section 12 is provided continuously within the inner surface, and a fiber sheet 20 that is provided to an outer surface of the corner section 12 is provided continuously within the outer surface.

## Description

### Technical Field

The present invention relates to a composite material member on which a corner section is formed, a reinforced molded body, a pultrusion device, and a pultrusion method.

### Background Art

In the related art, as a composite material member on which a corner section is formed, a bending member using a laminated carbon fiber reinforced sheet is known (for example, refer to PTL 1). This member is molded by laminating flexible plies such as carbon fiber reinforced plastics, and by disposing a metal sheet between flexible plies, interlayer strength in a thickness direction of the member is improved.

### Citation List

### Patent Literature

[PTL 1] Japanese Unexamined Patent Application Publication No. 2014-024334

### Summary of Invention

### Technical Problem

Meanwhile, a case where a plurality of fiber sheets are pultruded in a pultrusion direction and pultrusion of a composite material member having a corner section is performed, in the molded composite material member, a plate thickness of the corner section and plate thicknesses of portions other than the corner section are the same as each other. That is, in a lamination number of the fiber sheets laminated at the time of the pultrusion, the lamination number of the corner section and the lamination number of a portion other than the corner section are the same as each other. Accordingly, in order to increase stiffness of the corner section, it is considered that the plate thickness of the corner section is increased by increasing the number of lamination of the fiber sheets. However, in this case, the plate thickness of the portion other than the corner section also increases, and thus, weight of the composite material member increases unnecessarily, or when the fiber sheet is used unnecessarily, and a manufacturing cost of the composite material member increases.

Accordingly, an object of the present invention is to provide a composite material member, a reinforced molded body, a pultrusion device, and a pultrusion method capable of improving stiffness in the corner section while suppressing an unnecessary increase of the fiber sheet.

### Solution to Problem

According to an aspect of the present invention, there is provided a composite material member including: a plurality of fiber sheets which extend along a longitudinal direction; and a reinforcement material which is provided inside a corner section formed by the plurality of fiber sheets, in which a thickness of the corner section in which the reinforcement material is provided is thicker than a thickness of a portion continuous to the corner section.

In addition, according to another aspect of the present invention, there is provided a reinforced molded body which is a reinforcement material provided inside a corner section formed by a plurality of fiber sheets extending along a longitudinal direction, in which a reinforcing fiber sheet configured of reinforcing fibers in the form of a sheet is preliminarily molded.

According to the configurations, the thickness of the corner section is thicker than the thickness of the portion (that is, a portion other than the corner section) continuous to the corner section due to the reinforcement material, and thus, it is possible to increase the stiffness of the corner section. In addition, since the reinforcement material is not provided in the portion other than the corner section, it is not necessary to increase the thickness of the portion other than the corner section, and thus, it is possible to suppress an unnecessary increase in the fiber sheets. Moreover, the reinforcement material is interposed between the fiber sheets or is inserted into a portion between the fiber sheets, and thus, the reinforcement material is disposed inside the corner section.

Moreover, preferably, the fiber sheet provided on an inner surface of the corner section is continuously provided in the inner surface, and the fiber sheet provided on an outer surface of the corner section is continuously provided in the outer surface.

According to this configuration, the fiber sheet of the inner surface of the corner section is continuously provided, and thus, it is possible to suppress occurrence of defects such as cracks on the inner surface. Similarly, the fiber sheet of the outer surface of the corner section is continuously provided, and thus, it is possible to suppress occurrence of defects such as cracks on the outer surface.

In addition, preferably, the plurality of fiber sheets is provided to be laminated on the corner section, and the reinforcement material includes an in-plane reinforcing fiber which is provided between the laminated fiber sheets and has a fiber direction which is the same as the longitudinal direction.

According to this configuration, the in-plane reinforcing fiber is used as the reinforcement material, and thus, the plurality of fiber sheets and the plurality of in-plane reinforcing fibers can be disposed in the corner section while being pultruded in the longitudinal direction. Therefore, the reinforcement material is easily disposed in the corner section, and it is possible to improve the stiffness of the corner section by a simple configuration.

In addition, preferably, the reinforcement material further includes an out-plane reinforcing fiber having a fiber direction which is the same as an interlayer direction of the fiber sheet.

According to this configuration, it is possible to improve interlayer strength of the laminated fiber sheets by the out-plane reinforcing fibers.

Moreover, preferably, the plurality of fiber sheets are provided to be laminated in the corner section, the reinforcement material is a reinforced molded body in which a reinforcing fiber sheet configured of reinforcing fibers in the form of a sheet is preliminarily molded, and the reinforced molded body is provided between the plurality of fiber sheets laminated in the corner section.

According to this configuration, since the preliminarily molded reinforced molded body is used as the reinforcement material, for example, even when the reinforcing fiber included in the reinforcing fiber sheet of the reinforced molded body has the fiber direction different from the pultrusion direction, the plurality of fiber sheets and the reinforced molded body can be disposed in the corner section while being pultruded in the pultrusion direction. Accordingly, the reinforcement material is easily disposed in the corner section, and it is possible to improve the stiffness of the corner section by a simple configuration.

Moreover, preferably, a plurality of the reinforcing fiber sheets are provided to be laminated, and the reinforcement material further includes an out-plane reinforcing fiber having a fiber direction which is the same as an interlayer direction of the reinforcing fiber sheet.

According to this configuration, it is possible to improve the interlayer strength of the laminated reinforcing fiber sheets by the out-plane reinforcing fiber.

According to still another aspect of the present invention, there is provided a pultrusion device of a composite material member having a plurality of fiber sheets pultruded in a pultrusion direction, including: a molding tool which disposes a reinforcement material inside a corner section formed by the plurality of fiber sheets pultruded in the pultrusion direction so as to perform molding, the molding tool performs the molding such that a thickness of the corner section in which the reinforcement material is provided is thicker than a thickness of a portion continuous to the corner section.

In addition, according to still another aspect of the present invention, there is provided a pultrusion method of a composite material member which performs molding while pultruding a plurality of fiber sheets in a pultrusion direction, including: a pultrusion step of disposing a reinforcement material inside a corner section formed by the plurality of fiber sheets pultruded in the pultrusion direction so as to perform molding, in which in the pultrusion step, the molding is performed such that a thickness of the corner section in which the reinforcement material is provided is thicker than a thickness of a portion continuous to the corner section.

According to the configurations, at the time of the pultrusion, since the reinforcement material is disposed inside the corner section, the thickness of the corner section can be thicker than the thickness of the portion (that is, a portion other than the corner section) continuous to the corner section, and thus, it is possible to increase the stiffness of the corner section. In addition, since the reinforcement material is not provided in the portion other than the corner section, it is not necessary to increase the thickness of the portion other than the corner section, and thus, it is possible to suppress an unnecessary increase in the fiber sheets.

In addition, preferably, the reinforcement material is a reinforced molded body in which a reinforcing fiber sheet configured of reinforcing fibers in the form of a sheet is preliminarily molded, and the pultrusion device further includes a preliminary molding tool which preliminarily molds the reinforced molded body by pultruding the reinforcing fiber sheet along the pultrusion direction.

Moreover, preferably, the reinforcement material is a reinforced molded body in which a reinforcing fiber sheet configured of reinforcing fibers in the form of a sheet is preliminarily molded, and the pultrusion method further includes a reinforcement material molding step of preliminarily molding the reinforced molded body by pultruding the reinforcing fiber sheet along the pultrusion direction.

According to this configuration, since the preliminarily molded reinforced molded body is used as the reinforcement material, for example, even when the reinforcing fiber included in the reinforcing fiber sheet of the reinforced molded body has the fiber direction different from the pultrusion direction, the reinforcement material can be disposed in the corner section. Accordingly, at the time of the pultrusion, the reinforcement material is easily disposed in the corner section, and it is possible to improve the stiffness of the corner section by a simple configuration.

### Brief Description of Drawings

Fig. 1 is a sectional view schematically showing an example of a composite material member according to a first embodiment.
Fig. 2 is a schematic configuration view showing an example of a pultrusion device according to the first embodiment.
Fig. 3 is a schematic configuration view showing an example of a reinforcement material supply unit of the pultrusion device according to the first embodiment.
Fig. 4 is a flowchart relating to a pultrusion method according to the first embodiment.
Fig. 5 is a sectional view schematically showing an example of a composite material member according to a first modification example of the first embodiment.
Fig. 6 is a sectional view schematically showing an example of a composite material member according to a second embodiment.
Fig. 7 is a schematic configuration view showing an example of a reinforcement material supply unit of a pultrusion device according to the second embodiment.
Fig. 8 is a flowchart relating to a pultrusion method according to the second embodiment.
Fig. 9 is a sectional view schematically showing an example of a composite material member according to a second modification example of the second embodiment. Description of Embodiments

Hereinafter, embodiments according to the present invention will be described in detail based on the drawings. Moreover, the present invention is not limited by the embodiments. In addition, constituent elements in the following embodiments include constituent elements which can be easily replaced by a person skilled in the art, or constituent elements which are substantially the same. Further, the constituent elements described below can be appropriately combined, and in a case where there are a plurality of embodiments, it is also possible to combine the embodiments.

### [First Embodiment]

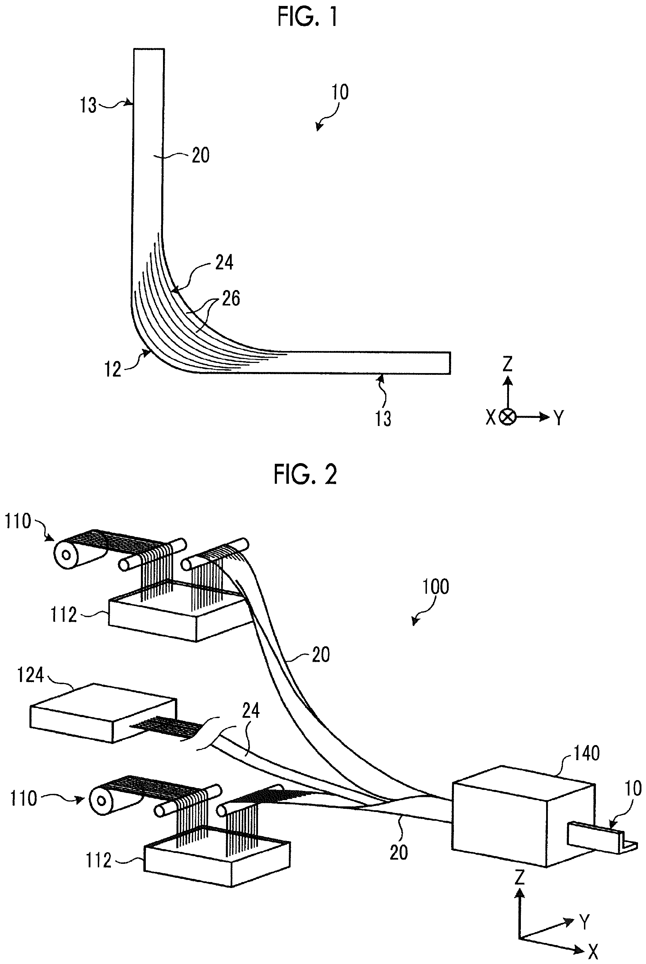

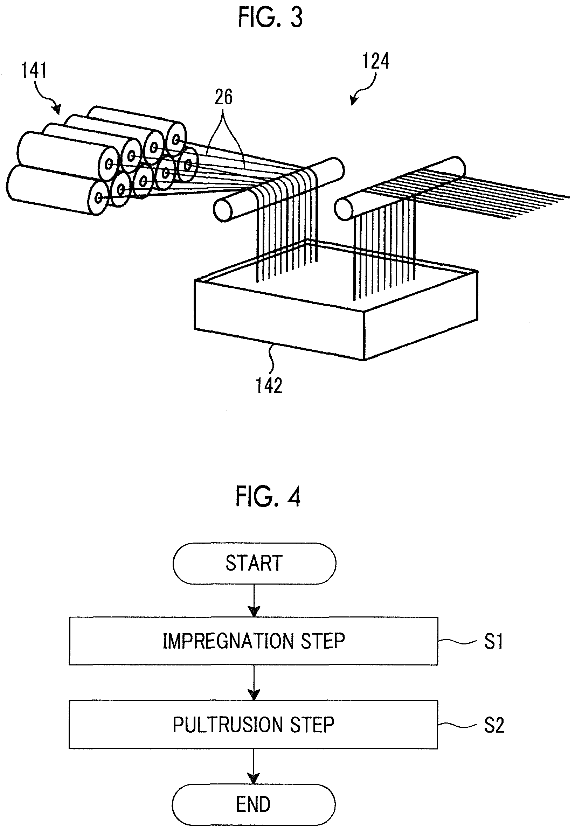

Fig. 1 is a sectional view schematically showing an example of a composite material member according to a first embodiment. Fig. 2 is a schematic configuration view showing an example of a pultrusion device according to the first embodiment. Fig. 3 is a schematic configuration view showing an example of a reinforcement material supply unit of the pultrusion device according to the first embodiment. Fig. 4 is a flowchart relating to a pultrusion method according to the first embodiment.

The composite material member according to the first embodiment is a pultrusion material 10 which is pultruded along a longitudinal direction which is an X axis direction shown in Fig. 1 and has a shape extending in the X axis direction. The pultrusion material 10 is formed in a predetermined shape having a corner section 12 in a YZ plane shown in Fig. 1, that is, in a cross section orthogonal to the longitudinal direction. In the first embodiment, an angle member whose cross section is formed in an L shape is applied to the pultrusion material 10. However, the present invention is not limited to this, and the cross section may be formed in any shape such as a recessed shape as long as it has a corner section 12.

As shown in Fig. 1, in the pultrusion material 10, both sides orthogonal to the longitudinal direction are bent, and thus, the corner section 12 is formed. That is, the pultrusion material 10 includes the corner section 12 and a pair of flat sections 13 which are continuous to both sides of the corner section 12. In addition, the pultrusion material 10 includes a plurality of fiber sheets 20 and a reinforcement material 24.

The plurality of fiber sheets 20 are formed in a sheet shape extending in the X axis direction, and at the time of the pultrusion, are deformed to have a predetermined shape (L shape in Fig. 1) in the YZ plane. The fiber sheet 20 is a composite material including reinforcing fibers and a thermosetting resin impregnated in reinforcing fibers. For each fiber sheet 20, for example, a plurality of layers of reinforcing fibers oriented in a predetermined fiber direction are laminated, and the fiber sheet, in which fiber directions with different fibers direction of the respective layers are multi-directions, is used. Here, in the first embodiment, for example, carbon fibers are applied as reinforcing fibers. However, the present invention is not limited to carbon fibers, and glass fibers or the like may be applied. In addition, in the first embodiment, for example, an epoxy resin is used as a thermosetting resin. However, the present invention is not limited to the epoxy resin, and other thermosetting resins may be applied. Moreover, a thermoplastic resin may be applied instead of the thermosetting resin. Examples of the thermoplastic resin include polyetheretherketone (PEEK), polyetherketoneketone (PEKK), polyphenylene sulfide (PPS), or the like.

The reinforcement material 24 is provided inside the corner section 12. The reinforcement material 24 has in-plane reinforcing fibers 26 provided between the layers of the laminated fiber sheets 20. The in-plane reinforcing fibers 26 are reinforcing fibers such as carbon fibers, and fiber directions of the in-plane reinforcing fibers 26 are oriented along the longitudinal direction of the pultrusion material 10. The in-plane reinforcing fibers 26 are provided for the number corresponding to stiffness required for corner section 12.

A thickness of the corner section 12 where the reinforcement material 24 is provided is formed to be thicker than a thickness of the flat section 13, which is a portion where the reinforcement material 24 is not provided. In addition, the fiber sheet 20 of an inner surface of the corner section 12 is provided continuously in the inner surface of the corner section 12. Similarly, the fiber sheet 20 of an outer surface of the corner section 12 is provided continuously in the outer surface of the corner section 12.

Next, a pultrusion device 100 will be described with reference to Fig. 2. The pultrusion device 100 is a device which performs molding while pultruding the pultrusion material 10 in a pultrusion direction. In this case, the pultrusion direction is the same as the longitudinal direction of the pultrusion material 10.

As shown in Fig. 2, the pultrusion device 100 includes a plurality of fiber sheet supply units 110, a plurality of resin pools 112, a reinforcement material supply unit 124, and a molding tool 140.

Each fiber sheet supply unit 110 supplies the fiber sheet 20 to the molding tool 140. The fiber sheet supply unit 110 feeds out a wound fiber sheet 20 in a dry state (that is, a state where the thermosetting resin is not impregnated into the fiber sheet 20). Here, the fiber sheet supply unit 110 is appropriately installed for the number of the fiber sheets 20 used for the pultrusion material 10 to be molded. However, the fiber sheet 20 fed out by the fiber sheet supply unit 110 may use a fiber sheet (prepreg or the like) already impregnated with a resin.

The resin pool 112 is a pool which stores the thermosetting resin, and a plurality of resin pools 112 are provided according to the number of the fiber sheet supply units 110. In the resin pool 112, the fiber sheet 20 fed out from the fiber sheet supply unit 110 is impregnated with the thermosetting resin so that the fiber sheet 20 is wet (that is, the fiber sheet 20 is impregnated with the thermosetting resin). However, in a case where the fiber sheet 20 fed out by the fiber sheet supply unit 110 is the fiber sheet (prepreg or the like) already impregnated with a resin, the fiber sheet 20 is supplied from the fiber sheet supply unit 110 to the molding tool 140 as it is.

As shown in Figs. 2 and 3, the reinforcement material supply unit 124 supplies the in-plane reinforcing fibers 26 included in the reinforcement material 24 to the molding tool 140. As shown in Fig. 3, the reinforcement material supply unit 124 includes a reinforcing fiber supply unit for reinforcement 141 and a resin pool for reinforcement 142.

The reinforcing fiber supply unit for reinforcement 141 supplies the in-plane reinforcing fibers 26 to the molding tool 140. The reinforcing fiber supply unit for reinforcement 141 feeds out a plurality of dry in-plane reinforcing fibers 26 wound in a roll.

Similarly the resin pool 112, the resin pool for reinforcement 142 is a pool which stores the thermosetting resin, and a plurality of resin pools for reinforcement 142 are appropriately provided according to the number of the reinforcing fiber supply units for reinforcement 141. In the resin pool for reinforcement 142, the in-plane reinforcing fibers 26 fed out from the reinforcing fiber supply unit for reinforcement 141 are impregnated with the thermosetting resin so that the in-plane reinforcing fibers 26 are wet (that is, in-plane reinforcing fibers 26 are impregnated with the thermosetting resin).

As shown in Fig. 2, in the molding tool 140, the wet fiber sheets 20 and the wet in-plane reinforcing fibers 26 are pultruded along the pultrusion direction, and thus, the pultrusion material 10 shown in Fig. 1 is molded. The molding tool 140 has a heating unit (not shown), the heating unit thermally cures the thermosetting resin included in the wet fiber sheets 20 and the wet in-plane reinforcing fibers 26, and thus, the pultrusion material 10 is molded.

Next, with reference to Fig. 4, a series of operations relating to the pultrusion method of the pultrusion material 10 using the pultrusion device 100 will be described. As shown in Fig. 4, in the pultrusion method, an impregnation step S1 and a pultrusion step S2 are performed in order.

In the impregnation step S1, the dry fiber sheet 20 fed out from the fiber sheet supply unit 110 is immersed into the resin pool 112, and thus, the fiber sheet 20 is impregnated with the thermosetting resin. However, in the case where the fiber sheet 20 fed out by the fiber sheet supply unit 110 is the fiber sheet (prepreg or the like) already impregnated with a resin, the impregnation step S1 in the fiber sheet 20 is omitted. In addition, in the impregnation step S1, the dry in-plane reinforcing fiber 26 fed out from the reinforcing fiber supply unit for reinforcement 141 is immersed into the resin pool for reinforcement 142, and thus, the in-plane reinforcing fiber 26 is impregnated with the thermosetting resin.

In the pultrusion step S2, the wet fiber sheets 20 and the in-plane reinforcing fibers 26 are guided to the molding tool 140 while being pultruded in the pultrusion direction. In this case, the fiber sheet 20 is bent and deformed to be the L-shaped pultrusion material 10, and the in-plane reinforcing fibers 26 are inserted into a portion between the layers of the fiber sheets 20 so as to be disposed inside the corner section 12 of the pultrusion material 10 and are introduced into the molding tool 140. In addition, in the pultrusion step S2, the thermosetting resin included in the fiber sheets 20 and the in-plane reinforcing fibers 26 are cured while the fiber sheets 20 and the in-plane reinforcing fibers 26 introduced into the molding tool 140 are pultruded in the pultrusion direction, and thus, the L-shaped pultrusion material 10 is molded.

As described above, according to the first embodiment, the thickness of the corner section 12 is thicker than the thickness of the flat section 13 continuous to the corner section 12 due to the reinforcement material 24, and thus, it is possible to increase the stiffness of the corner section 12. In addition, since the reinforcement material 24 is not provided in the flat section 13, it is not necessary to increase the thickness of the flat section 13, and thus, it is possible to suppress an unnecessary increase in the fiber sheets 20.

In addition, according to the first embodiment, the fiber sheet 20 of the inner surface of the corner section 12 is continuously provided, and thus, it is possible to suppress occurrence of defects such as cracks on the inner surface. Similarly, the fiber sheet 20 of the outer surface of the corner section 12 is continuously provided, and thus, it is possible to suppress occurrence of defects such as cracks on the outer surface.

Moreover, according to the first embodiment, the in-plane reinforcing fibers 26 are used as the reinforcement material 24, and thus, the plurality of fiber sheets 20 and the plurality of in-plane reinforcing fibers 26 can be disposed in the corner section 12 while being pultruded in the pultrusion direction. Accordingly, the reinforcement material 24 is easily disposed in the corner section 12, and it is possible to improve the stiffness of the corner section 12 by a simple configuration.

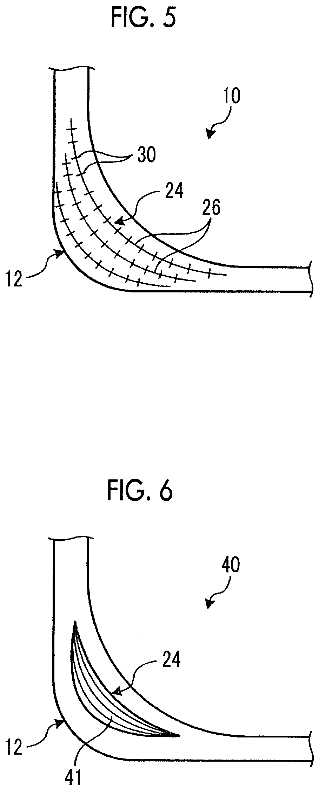

Moreover, in the first embodiment, the reinforcement material 24 is constituted by using the in-plane reinforcing fibers 26. However, a first modification example shown in Fig. 5 may be adopted. Fig. 5 is a sectional view schematically showing an example of a composite material member according to the first modification example of the first embodiment. As shown in Fig. 5, the pultrusion material 10 of the first modification example is obtained by further adding out-plane reinforcing fibers 30 in addition to the in-plane reinforcing fibers 26 as the reinforcement material 24 to the pultrusion material 10 of the first embodiment.

The out-plane reinforcing fibers 30 are provided inside the corner section 12 of the pultrusion material 10 and are arranged in the same fiber direction as an interlayer direction of the fiber sheet 20. In addition, the out-plane reinforcing fibers 30 are provided over the plurality of laminated fiber sheets 20.

As described above, according to the first modification example, it is possible to improve interlayer strength of the laminated fiber sheets 20 by the out-plane reinforcing fibers 30.

### [Second Embodiment]

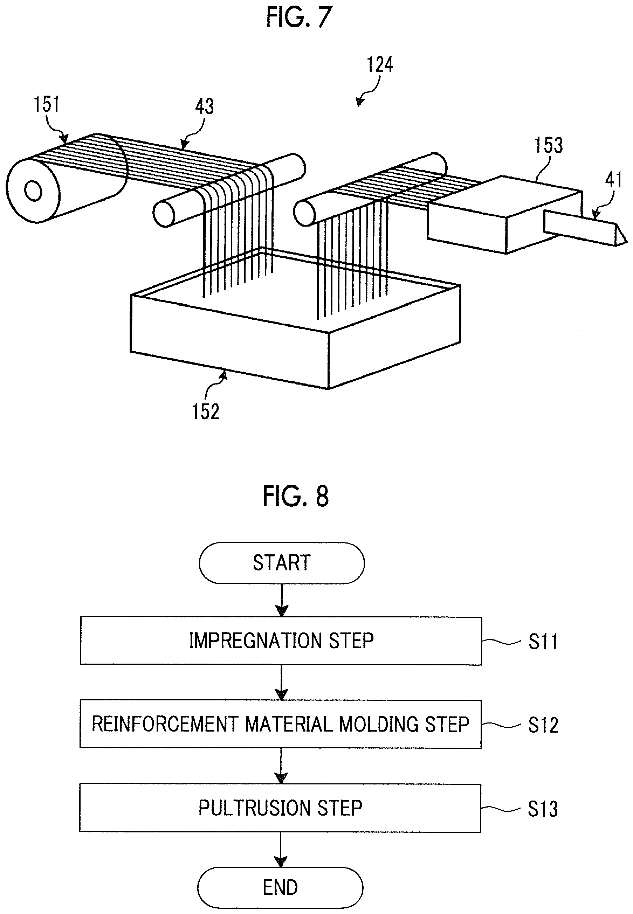

Next, with reference to Figs. 6 to 8, a pultrusion material 40 according to a second embodiment will be described. Moreover, in the second embodiment, portions different from the first embodiment will be described in order to avoid redundant description, and portions having the same configuration as in the first embodiment will be described with the same reference numerals. Fig. 6 is a sectional view schematically showing an example of a composite material member according to the second embodiment. Fig. 7 is a schematic configuration view showing an example of a reinforcement material supply unit of a pultrusion device according to the second embodiment. Fig. 8 is a flowchart relating to a pultrusion method according to the second embodiment.

In the pultrusion material 40 of the second embodiment, as the reinforcement material 24, a reinforced molded body 41 is applied. The reinforced molded body 41 is obtained by preliminarily molding a reinforcing fiber sheet 43 configured of reinforcing fibers in the form of a sheet and is provided between the layers of the laminated fiber sheets 20 in the corner section 12. The reinforcing fiber sheet 43 is a fiber sheet including reinforcing fibers having a fiber direction different from the longitudinal direction. For example, for the reinforcing fiber sheet 43, a plurality of layers of reinforcing fibers oriented in a predetermined fiber direction are laminated, and the reinforcing fiber sheet, in which fiber directions with different fibers direction of the respective layers are multi-directions, is used, and the reinforcing fiber sheet is the same as the fiber sheet 20. Moreover, the reinforcing fiber sheet 43 is not limited to the above, and for example, a nonwoven fabric such as felt in which short fibers are entangled (random direction) may be applied.

In the cross section orthogonal to the longitudinal direction of the pultrusion material 10, the reinforced molded body 41 has a shape which follows the corner section 12, and has a curved shape (crescent-like shape), for example. The reinforced molded body 41 has a thickness corresponding to the stiffness required for the corner section 12. In addition, the reinforced molded body 41 is formed of reinforcing fiber sheets 43. However, the reinforced molded body 41 may be obtained by appropriately combining reinforcing fibers for reinforcement as long as it includes at least the reinforcing fiber sheets 43.

Next, the reinforcement material supply unit 124 of the pultrusion device 100 of the second embodiment will be described with reference to Fig. 7. As shown in Fig. 7, the reinforcement material supply unit 124 supplies the reinforced molded body 41 serving as the reinforcement material 24 to the molding tool 140. The reinforcement material supply unit 124 includes a reinforcing fiber sheet supply unit 151, a resin pool for reinforcement 152, and a preliminary molding tool 153.

The reinforcing fiber sheet supply unit 151 supplies the reinforcing fiber sheet 43 to the preliminary molding tool 153. The reinforcing fiber sheet supply unit 151 feeds out the dry reinforcing fiber sheets 43 (that is, the reinforcing fiber sheets 43 which are not impregnated with the thermosetting resin) wound on a roll.

Similarly the resin pool 112, the resin pool for reinforcement 152 is a pool which stores the thermosetting resin, and the resin pool for reinforcement 152 is appropriately provided according to the number of the reinforcing fiber supply units 151. In the resin pool for reinforcement 152, the reinforcing fiber sheets 43 fed out from the reinforcing fiber sheet supply unit 151 are impregnated with the thermosetting resin so that the reinforcing fiber sheets 43 are wet (that is, the reinforcing fiber sheets 43 are impregnated with the thermosetting resin).

In the preliminary molding tool 153, the wet reinforcing fiber sheets 43 are pultruded along the pultrusion direction, and thus, the reinforced molded body 41 is molded. The preliminary molding tool 153 has a heating unit (not shown), the heating unit thermally cures the thermosetting resin included in the wet reinforcing fiber sheets 43, and thus, the reinforced molded body 41 is molded.

Next, with reference to Fig. 8, a series of operations relating to the pultrusion method of the pultrusion material 10 using the pultrusion device 100 of the second embodiment will be described. As shown in Fig. 8, in the pultrusion method, an impregnation step S11, a reinforcement material molding step S12, and a pultrusion step S13 are performed in order.

In the impregnation step S11, the dry fiber sheet 20 fed out from the fiber sheet supply unit 110 is immersed into the resin pool 112, and thus, the fiber sheet 20 is impregnated with the thermosetting resin. However, in the case where the fiber sheet 20 fed out by the fiber sheet supply unit 110 is the fiber sheet (prepreg or the like) already impregnated with a resin, the impregnation step S1 in the fiber sheet 20 is omitted. In addition, in the impregnation step S11, the dry reinforcing fiber sheets 43 fed out from the reinforcing fiber sheet supply unit 151 are immersed into the resin pool for reinforcement 152, and thus, the reinforcing fiber sheets 43 are impregnated with the thermosetting resin.

In the reinforcement material molding step S12, the wet reinforcing fiber sheets 43 are guided to the preliminary molding tool 153 while being pultruded in the pultrusion direction. In this case, the reinforcing fiber sheets 43 are bent and deformed to have a crescent-shaped cross section and are introduced into the preliminary molding tool 153. In addition, in the reinforcement material molding step S12, the thermosetting resin included in the reinforcing fiber sheets 43 is cured while the reinforcing fiber sheets 43 introduced into the preliminary molding tool 153 are pultruded in the pultrusion direction, and thus, the reinforced molded body 41 which is an intermediate body is preliminarily molded.

In the pultrusion step S13, the wet fiber sheet 20 and the preliminarily molded reinforced molded body 41 are guided to the molding tool 140 while being pultruded in the pultrusion direction. In this case, the fiber sheet 20 is bent and deformed to be the L-shaped pultrusion material 40, and the reinforced molded body 41 is inserted into the portion between the layers of the fiber sheets 20 so as to be disposed inside the corner section 12 of the pultrusion material 40 and is introduced into the molding tool 140. In addition, in the pultrusion step S13, the thermosetting resin included in the fiber sheets 20 and the reinforced molded body 41 are cured while the fiber sheets 20 and the reinforced molded body 41 introduced into the molding tool 140 are pultruded in the pultrusion direction, and thus, the L-shaped pultrusion material 40 is molded.

As described above, according to the second embodiment, the reinforced molded body 41 which is preliminarily molded as the reinforcement material 24 is used, and thus, the plurality of fiber sheets 20 and the reinforced molded body 41 can be disposed at the corner section 12 while be pultruded in the pultrusion direction. Accordingly, the reinforcement material 24 is easily disposed in the corner section 12, and it is possible to improve the stiffness of the corner section 12 by a simple configuration. In this case, the fiber directions of the reinforcing fibers included in the reinforcing fiber sheet 43 of the reinforced molded body 41 may be different from the pultrusion direction.

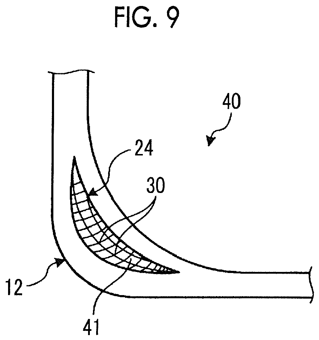

In addition, in the second embodiment, the reinforcement material 24 is constituted using the reinforced molded body 41. However, a second modification example shown in Fig. 9 may be adopted. Fig. 9 is a sectional view schematically showing an example of a composite material member according to the second modification example of the second embodiment. As shown in Fig. 9, the pultrusion material 10 of the second modification example is obtained by further adding the out-plane reinforcing fibers 30 similar to those of the first modification example in addition to the reinforced molded body 41 as the reinforcement material 24 to the pultrusion material 40 of the second embodiment.

The out-plane reinforcing fibers 30 are provided inside the corner section 12 of the pultrusion material 40 and are arranged such that the fiber directions of the out-plane reinforcing fibers 30 are the same as the interlayer direction of the reinforcing fiber sheet 43 of the reinforced molded body 41. In addition, the out-plane reinforcing fibers 30 are provided over the plurality of laminated reinforcing fiber sheets 43, and that is, are provided in the thickness direction of the reinforced molded body 41.

As described above, according to the second modification example, it is possible to improve interlayer strength of the reinforced molded body 41 by the out-plane reinforcing fibers 30.

In addition, in the first and second embodiments, the pultrusion material 10 is configured to include the plurality of fiber sheets 20 and the reinforcement material 24. However, the present invention is not limited to this, and may be constituted to include the reinforcing fibers. Specifically, as the reinforcing fibers, reinforcing fibers having the pultrusion direction (longitudinal direction) as the fiber direction may be used as the reinforcing fibers for reinforcement so as to be disposed at a predetermined portion of the pultrusion material 10. In the case, the reinforcing fibers for reinforcement may be provided so as to intersect with the fiber sheet 20, may be provided on the outermost layer, or may be provided in any form.

### Reference Signs List

- 10:: pultrusion material
- 20:: fiber sheet
- 24:: reinforcement material
- 26:: in-plane reinforcing fiber
- 30:: out-plane reinforcing fiber
- 40:: pultrusion material (second embodiment)
- 41:: reinforced molded body
- 43:: reinforcing fiber sheet
- 100:: pultrusion device
- 110:: fiber sheet supply unit
- 112:: resin pool
- 124:: reinforcement material supply unit
- 140:: molding tool
- 141:: reinforcing fiber supply unit for reinforcement
- 142:: resin pool for reinforcement
- 151:: reinforcing fiber sheet supply unit
- 152:: resin pool for reinforcement
- 153:: preliminary molding tool

## Claims

1. A composite material member comprising:
a plurality of fiber sheets which extend along a longitudinal direction; and
a reinforcement material which is provided inside a corner section formed by the plurality of fiber sheets,
wherein a thickness of the corner section in which the reinforcement material is provided is thicker than a thickness of a portion continuous to the corner section.

2. The composite material member according to claim 1,
wherein the fiber sheet provided on an inner surface of the corner section is continuously provided in the inner surface, and
wherein the fiber sheet provided on an outer surface of the corner section is continuously provided in the outer surface.

3. The composite material member according to claim 1 or 2,
wherein the plurality of fiber sheets are provided to be laminated on the corner section, and
wherein the reinforcement material includes an in-plane reinforcing fiber which is provided between the laminated fiber sheets and has a fiber direction which is the same as the longitudinal direction.

4. The composite material member according to claim 3,
wherein the reinforcement material further includes an out-plane reinforcing fiber having a fiber direction which is the same as an interlayer direction of the fiber sheet.

5. The composite material member according to claim 1 or 2,
wherein the plurality of fiber sheets are provided to be laminated in the corner section,
wherein the reinforcement material is a reinforced molded body in which a reinforcing fiber sheet configured of reinforcing fibers in the form of a sheet is preliminarily molded, and
wherein the reinforced molded body is provided between the plurality of fiber sheets laminated in the corner section.

6. The composite material member according to claim 5,
wherein a plurality of the reinforcing fiber sheets are provided to be laminated, and
wherein the reinforcement material further includes an out-plane reinforcing fiber having a fiber direction which is the same as an interlayer direction of the reinforcing fiber sheet.

7. A reinforced molded body which is a reinforcement material provided inside a corner section formed by a plurality of fiber sheets extending along a longitudinal direction,
wherein a reinforcing fiber sheet configured of reinforcing fibers in the form of a sheet is preliminarily molded.

8. A pultrusion device of a composite material member having a plurality of fiber sheets pultruded in a pultrusion direction, comprising:
a molding tool which disposes a reinforcement material inside a corner section formed by the plurality of fiber sheets pultruded in the pultrusion direction so as to perform molding,
wherein the molding tool performs the molding such that a thickness of the corner section in which the reinforcement material is provided is thicker than a thickness of a portion continuous to the corner section.

9. The pultrusion device according to claim 8,
wherein the reinforcement material is a reinforced molded body in which a reinforcing fiber sheet configured of reinforcing fibers in the form of a sheet is preliminarily molded, and
wherein the pultrusion device further includes a preliminary molding tool which preliminarily molds the reinforced molded body by pultruding the reinforcing fiber sheet along the pultrusion direction.

10. A pultrusion method of a composite material member which performs molding while pultruding a plurality of fiber sheets in a pultrusion direction, comprising:
a pultrusion step of disposing a reinforcement material inside a corner section formed by the plurality of fiber sheets pultruded in the pultrusion direction so as to perform molding,
wherein in the pultrusion step, the molding is performed such that a thickness of the corner section in which the reinforcement material is provided is thicker than a thickness of a portion continuous to the corner section.

11. The pultrusion method according to claim 10,
wherein the reinforcement material is a reinforced molded body in which a reinforcing fiber sheet configured of reinforcing fibers in the form of a sheet is preliminarily molded, and
wherein the pultrusion method further includes a reinforcement material molding step of preliminarily molding the reinforced molded body by pultruding the reinforcing fiber sheet along the pultrusion direction.

## Amended claims

### Amended claims under Art. 19.1 PCT

1. (Amended) A composite material member comprising:
a plurality of fiber sheets which extend along a longitudinal direction; and
a reinforcement material which is provided inside a corner section formed by the plurality of fiber sheets,
wherein a thickness of the corner section in which the reinforcement material is provided is thicker than a thickness of a portion continuous to the corner section,
wherein the plurality of fiber sheets are provided to be laminated on the corner section, and
wherein the reinforcement material includes an in-plane reinforcing fiber which is provided between the laminated fiber sheets and has a fiber direction which is the same as the longitudinal direction.

2. The composite material member according to claim 1,
wherein the fiber sheet provided on an inner surface of the corner section is continuously provided in the inner surface, and
wherein the fiber sheet provided on an outer surface of the corner section is continuously provided in the outer surface.

3. (Deleted)

4. (Amended) The composite material member according to claim 1 or 2,
wherein the reinforcement material further includes an out-plane reinforcing fiber having a fiber direction which is the same as an interlayer direction of the fiber sheet.

5. (Amended) A composite material member, comprising:
a plurality of fiber sheets which extend in a longitudinal direction; and
a reinforcement material which is provided inside a corner section formed by the plurality of fiber sheets,
wherein a thickness of the corner section in which the reinforcement material is provided is thicker than a thickness of a portion continuous to the corner section,
wherein the plurality of fiber sheets are provided to be laminated on the corner section,
wherein the reinforcement material is a reinforced molded body in which a reinforcing fiber sheet configured of reinforcing fibers in the form of a sheet is preliminarily molded, and
wherein the reinforced molded body is provided between the plurality of fiber sheets laminated in the corner section.

6. The composite material member according to claim 5,
wherein a plurality of the reinforcing fiber sheets are provided to be laminated, and
wherein the reinforcement material further includes an out-plane reinforcing fiber having a fiber direction which is the same as an interlayer direction of the reinforcing fiber sheet.

7. (Deleted)

8. A pultrusion device of a composite material member having a plurality of fiber sheets pultruded in a pultrusion direction, comprising:
a molding tool which disposes a reinforcement material inside a corner section formed by the plurality of fiber sheets pultruded in the pultrusion direction so as to perform molding,
wherein the molding tool performs the molding such that a thickness of the corner section in which the reinforcement material is provided is thicker than a thickness of a portion continuous to the corner section.

9. The pultrusion device according to claim 8,
wherein the reinforcement material is a reinforced molded body in which a reinforcing fiber sheet configured of reinforcing fibers in the form of a sheet is preliminarily molded, and
wherein the pultrusion device further includes a preliminary molding tool which preliminarily molds the reinforced molded body by pultruding the reinforcing fiber sheet along the pultrusion direction.

10. A pultrusion method of a composite material member which performs molding while pultruding a plurality of fiber sheets in a pultrusion direction, comprising:
a pultrusion step of disposing a reinforcement material inside a corner section formed by the plurality of fiber sheets pultruded in the pultrusion direction so as to perform molding,
wherein in the pultrusion step, the molding is performed such that a thickness of the corner section in which the reinforcement material is provided is thicker than a thickness of a portion continuous to the corner section.

11. The pultrusion method according to claim 10,
wherein the reinforcement material is a reinforced molded body in which a reinforcing fiber sheet configured of reinforcing fibers in the form of a sheet is preliminarily molded, and
wherein the pultrusion method further includes a reinforcement material molding step of preliminarily molding the reinforced molded body by pultruding the reinforcing fiber sheet along the pultrusion direction.

Statement under Art. 19.1 PCT
Claim 1 is limited by the requirement of Claim 3 and Claim 3 is deleted. Claim 4 refers to Claim 1 and Claim 2. Claim 5 is limited by the requirement of Claim 1. Claim 7 is deleted.
